# FASCICULE DE BREVET EUROPEEN

(11) **EP 0 568 410 B1**
(45) Date de publication et mention de la délivrance du brevet: **25.10.1995**
(21) Numéro de dépôt: 93401014.1
(22) Date de dépôt: 20.04.1993
(51) Int. Cl.: F16K 31/06

(54) **Valve à commande électrique sensiblement linéaire**
Magnetventil mit im wesentlichen linearer Kennlinie
Solenoid valve with a substantially linear characteristic line

(30) Priorité: 28.04.1992 FR 9205213
(43) Date de publication de la demande: 03.11.1993
(73) Titulaire: SAB WABCO S.A., 93270 Sevran (FR)
(72) Inventeur: Cazemage, André, F-78960 Voisins le Bretonneux (FR); Limozin, Henri, F-77410 Claye Souilly (FR); Le Gall, Gilbert, F-77177 Brou Sur Chantereine (FR)
(74) Mandataire: Hirsch, Marc-Roger

(56) Documents cités:
- CH-A- 408 577
- DE-A- 2 315 424
- DE-A- 3 240 276
- DE-B- 2 255 272
- DE-U- 8 626 681
- US-A- 3 788 597
- US-A- 4 921 208

## Description

La présente invention se rapporte à une valve à commande électrique susceptible de délivrer une pression de fluide variant de façon sensiblement linéaire avec l'intensité du courant électrique continu qui parcourt au moins un bobinage d'excitation et comprenant un noyau magnétique mobile axialement dans un alésage magnétique et agissant sur le poussoir, d'un détendeur de pression à clapet d'admission-échappement le noyau magnétique étant monté dans son alésage magnétique avec un très faible jeu d'entrefer et élant guidé axialement à chacune de ses extrémités par un axe de prolongement qui traverse un palier axial à roulement. Une telle valve est connue de US-A-3 788 597

Les valve à commande électrique par un courant continu et qui sont aptes à délivrer une pression de fluide variant de façon sensiblement linéaire avec l'intensité du courant électrique continu qui parcourt leur bobinage d'excitation, présentent presque toutes l'inconvénient d'être très encombrantes et d'exiger une puissance électrique de commande relativement importante car il faut disposer d'un grand nombre d'ampères-tours d'excitation pour exercer un effort électromécanique de commande résultant qui soit relativement fidèle, c'est-à-dire indépendant des frottements de fonctionnement. Un des moyens envisagés pour réduire le nombre d'ampères-tours d'excitation nécessaire consiste à réduire l'entrefer du circuit magnétique vers le noyau magnétique mobile axialement mais une telle réduction conduit à resserrer les tolérances de diamètre de ce noyau magnétique et de l'alésage magnétique dans lequel il se déplace et, par voie de conséquence, à assurer un guidage axial parfait de ce noyau magnétique au cours de son déplacement de commande.

Lorsqu'une telle valve à commande électrique doit présenter une hystérésis de commande la plus faible possible et que cette hystérésis se combine à celle d'organes de réglage et de positionnement extérieurs tels qu'un ressort taré, on est conduit à monter le noyau magnétique à chacune de ses extrémités sur un palier axial à roulement qui ne donne pas toujours satisfaction en service car il se produit parfois des coincements dans les alésages récepteurs de ces paliers axiaux qui ne sont pas toujours exactement parallèles et concentriques.

La présente invention a notamment pour objet une valve à commande électrique qui permette d'éviter ces défauts et difficultés en service tout en conservant de bonnes performances électromécaniques, c'est-à-dire en n'exigeant qu'un nombre d'ampères-tours d'excitation réduit, compte tenu de la stabilité et de la fidélité exigées pour le rapport entre la pression de sortie délivrée par la valve et le courant d'excitation de cette valve.

A cet effet, selon l'invention le détendeur de pression comprend un piston de réaction soumis à la pression de fluide délivrée par la valve et agissant à l'encontre d'un effort d'actionnement dont la valeur est déterminée par l'action du bobinage d'excitation sur le noyau magnétique, et le palier axial à roulement comporte une partie susceptible d'osciller par rapport à sa surface cylindrique de guidage, de manière à autoriser un léger désaxage entre les deux paliers à roulement tout en fixant l'axe de déplacement axial du noyau avec une précision interdisant tout contact entre ledit noyau magnétique et son alésage magnétique, malgré le très faible jeu d'entrefer existant. La partie d'un palier axial à roulement qui est susceptible d'osciller peut être constituée par la bague intérieure dudit palier axial, sur laquelle est ménagé un bourrelet à section transversale arrondie au contact avec la surface cylindrique extérieure de l'axe de prolongement correspondant, ou bien par la bague extérieure dudit palier axial, sur laquelle est ménagé un bourrelet à section transversale arrondie au contact avec la surface cylindrique intérieure de l'alésage de réception dudit palier axial dans le corps de valve.

Selon un autre mode de réalisation de la valve à commande électrique selon l'invention, le clapet d'admission-échappement du fluide sous pression est mobile dans deux alésages de guidage qui délimitent entre eux et respectivement avec la section transversale dudit clapet et une paroi transversale du corps de valve, une chambre d'équilibrage, qui présente sensiblement la même section que la section du clapet soumise à la pression délivrée par la valve, et qui est reliée à une chambre de réaction délimitée par le piston de réaction et elle-même reliée par un étranglement à la sortie de pression de ladite valve pour que la pression délivrée par la valve agisse dans la chambre d'équilibrage afin de repousser ledit clapet sur son siège d'obturation et la chambre d'équilibrage est reliée à la chambre de réaction par un étranglement ou un organe de perte de charge, de manière à amortir les oscillations éventuelles du noyau magnétique par le retard de la transmission de pression entre la chambre d'équilibrage et la chambre de réaction, tout en permettant l'équilibrage parfait après stabilisation, de l'action sur le clapet d'admission-échappement, de la pression délivrée par la valve.

Selon un autre mode de réalisation important de l'invention, lorsque la valve à commande électrique est destinée à délivrer une pression de fluide décroissante lorsque l'intensité du courant électrique continu du bobinage d'excitation croît, le noyau magnétique est en appui axial par un premier de ses prolongements sur le poussoir du détendeur de pression tandis que le second prolongement est en appui sur un ressort taré qui repousse ledit premier prolongement sur le poussoir du détendeur dans la direction d'ouverture à l'admission du clapet d'admission-échappement. L'action du bobinage d'excitation sur le noyau magnétique est alors opposée à l'action du ressort taré sur le poussoir du détendeur. Dans un tel cas, l'alimentation en fluide sous pression du détendeur est avantageusement contrôlée par un détendeur de sécurité dont la pression maximale d'alimentation est déterminée avec précision par un ressort taré de sécurité agissant sur un poussoir d'un clapet d'admission-échappement dudit détendeur de sécurité, solidaire d'un piston de réaction à la pression délivrée par le détendeur de sécurité. Dans un tel mode de réalisation de l'invention, le ressort taré agissant sur le noyau magnétique est avantageusement taré, pour qu'en l'absence de courant continu dans le bobinage d'excitation du noyau magnétique et dans le cas où la pression d'alimentation de la valve est suffisante, le détendeur de la valve délivre une pression de fluide supérieure à celle délivrée par le détendeur de sécurité, de manière que ledit détendeur de sécurité réalise l'écrêtement de la pression maximale délivrée par la valve. On évite ainsi que les faibles efforts électromagnétiques exercés sur le noyau magnétique et dont la résultante en combinaison avec les réactions de frottement est alors relativement incertaine, ne participent au réglage de la pression au voisinage des valeurs maximales de celle-ci.

Selon encore un autre mode de réalisation de l'invention, le ressort taré coopère, à une extrémité, avec un organe de stabilisation de l'effort de tarage du ressort, indépendamment des conditions extérieures (pression, température, hygrométrie, etc.). L'organe de stabilisation est de préférence interposé entre le corps d'une vis ou écrou de tarage du ressort taré et l'extrémité correspondante du ressort taré. L'organe de stabilisation peut présenter une forme de galette annulaire traversée par un téton central de la vis ou écrou de tarage, qui se prolonge extérieurement à ladite galette pour servir de guide central au ressort taré hélicoïdal. On utilise ainsi pleinement les qualités de précision et de fidélité de la valve à commande électrique selon l'invention qui risqueraient de rester sans objet lorsque la valve comporte au moins un ressort taré dont l'effort de réaction varie en fonction des conditions extérieures. Ces variations qui sont certes faibles se sont révélées de l'ordre de quelques pour cent d'une condition extrême à l'autre, c'est-à-dire des valeurs bien supérieures à la précision de la partie électromagnétique de la valve.

D'autres buts, avantages et caractéristiques apparaîtront à la lecture de la description d'un mode de réalisation de l'invention, faite à titre non limitatif et en regard du dessin annexé, dans lequel:
- la figure 1 représente en coupe schématique une valve à commande électrique selon l'invention, destinée en particulier à réguler la pression de freinage d'un véhicule ferroviaire;
- les figures 2 et 3 représentent en vue fragmentaire, en coupe et à plus grande échelle, chacune un mode de réalisation différent d'un palier axial à roulement de guidage du noyau magnétique de la valve de la figure 1;
- la figure 4 est un diagramme représentant les variations de la pression P délivrée par la valve selon l'invention, en fonction de l'intensité électrique I qui parcourt le bobinage d'excitation de la valve.

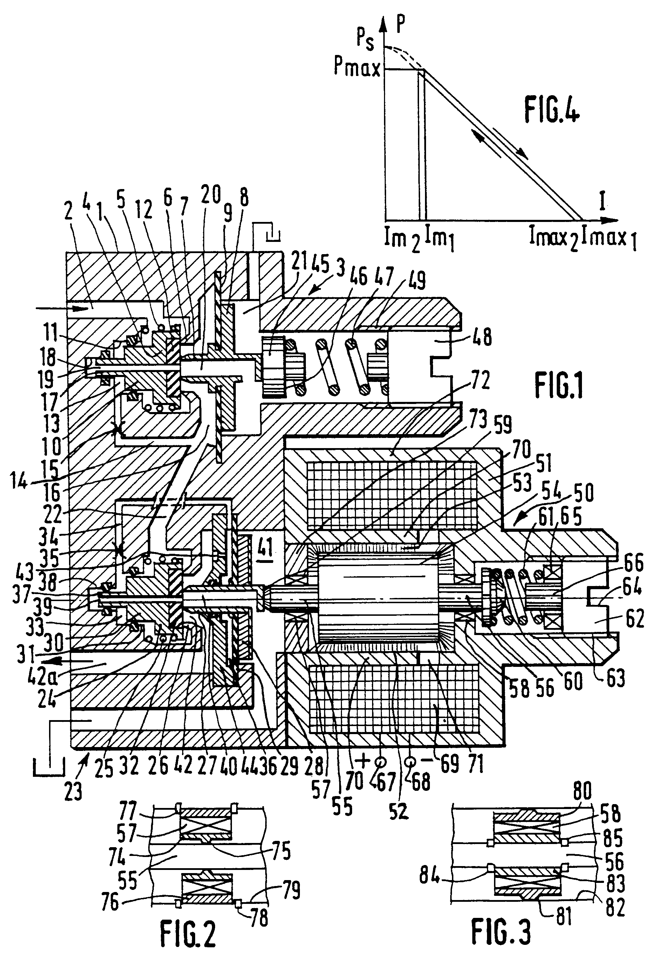

En se reportant à la figure 1, on voit que la valve à commande électrique selon l'invention est montée sur un corps ou embase 1 qui est alimenté en fluide sous pression, ici de l'air comprimé, à partir d'une source non représentée, par une conduite d'alimentation 2. L'alimentation en air comprimé traverse d'abord un détendeur d'alimentation ou de sécurité 3 représenté ici inclus dans le corps 1 mais qui peut y être rapporté ou placé à distance. Ce détendeur de sécurité 3 se compose principalement d'un clapet d'admission-échappement 4 repoussé par un ressort de rappel 5 sur un siège annulaire rigide 6. Le clapet 4 utilisé dans un détendeur de précision est complètement équilibré, c'est-à-dire qu'il n'est soumis à aucune force de pression dans toutes les positions de distribution et qu'il ne reçoit pas d'autres sollicitations que celles du ressort de rappel 5 et du poussoir 7 d'un piston de réaction 8 constitué d'un plateau en appui sur une membrane 9. Pour cela, le clapet 4 présente un premier prolongement 10, guidé de façon étanche dans un premier alésage 11, sensiblement de même diamètre que celui de l'appui annulaire de faible largeur de la rondelle d'étanchéité en élastomère 12 du clapet 4 sur le siège rigide 6, de façon à délimiter une première chambre d'équilibrage 13 reliée par un passage 14 à étranglement 15 à la chambre de sortie et de réaction 16 du détendeur 3.
Par ailleurs, le clapet 4 présente un deuxième prolongement 17 qui se déplace de façon étanche dans un alésage 18 dont le diamètre est sensiblement égal à celui de l'appui annulaire de faible largeur du poussoir 7 sur la rondelle d'étanchéité en élastomère 12. La deuxième chambre d'équilibrage délimitée par l'alésage 18 et le deuxième prolongement 17 est reliée par un passage central 19 du clapet 4, soit au passage central d'échappement 20 ménagé à travers le poussoir 7 et le piston de réaction 8 vers la chambre d'échappement 21 de la valve 3, lorsque le poussoir 7 est en appui sur la rondelle en élastomère 12, soit à la chambre de sortie et de réaction 16 lorsque le poussoir 7 est décollé de la rondelle 12 au cours d'une phase de mise à l'échappement de la chambre de sortie 16, une telle phase se produisant très rarement car le détendeur 3 fonctionne ici en valve d'alimentation.

La pression délivrée à la chambre de réaction 16 est amenée par une conduite intérieure 22 au détendeur de pression proprement dit 23 de la valve à commande électrique. Le détendeur 23 comporte certains des éléments du détendeur d'alimentation 3 remplissant sensiblement la même fonction, à savoir: un clapet d'alimentation-échappement 24 repoussé par un ressort de rappel 25 sur un siège annulaire rigide 26, un poussoir 27 d'un piston d'action et de réaction 28 à membrane 29, un premier prolongement 30 guidé de façon étanche dans un premier alésage 31 sensiblement de même diamètre que celui de l'appui annulaire de la rondelle d'étanchéité en élastomère 32 du clapet 24 sur le siège rigide 26, de façon à délimiter une première chambre d'équilibrage 33 reliée par un passage 34 à étranglement 35 à une chambre de réaction 36. Le clapet 24 présente de même un deuxième prolongement 37 qui se déplace dans un deuxième alésage 38 dont le diamètre est sensiblement égal à celui de l'appui annulaire du poussoir 27 sur la rondelle en élastomère 32, pour délimiter une chambre d'équilibrage reliée par un passage central 39 du clapet 24, soit au passage central 40 du poussoir 27, soit, lorsque le poussoir 27 est désolidarisé de la rondelle en élastomère 32, à une chambre de sortie 42. Le passage central 40 du poussoir 7 débouche au-dessus du piston de réaction 28 dans une chambre 41 de mise à l'atmosphère ou à l'échappement.

Pour la valve 23 à commande électrique, la chambre de sortie 42 est reliée, d'une part, à une conduite d'alimentation 42a vers des organes à alimenter, par exemple un circuit de pression de freinage de véhicule ferroviaire, d'autre part, via un étranglement à gicleur 43 à la chambre de réaction 36. Cette chambre de réaction 36, qui n'existe pas à l'identique dans le détendeur 3, est délimitée entre, d'une part, un plateau de séparation 44 traversé de façon mobile et étanche par le poussoir 27 et qui porte l'étranglement à gicleur 43 et, d'autre part, la membrane 29 du piston de réaction 28. La première chambre d'équilibrage 33 est ainsi reliée à la chambre de sortie 42 du détendeur 23 à travers deux étranglements en série, l'étranglement 35 pouvant être constitué par exemple par le seul passage 34 relativement long et de faible diamètre.

Si l'on revient au détendeur d'alimentation 3, on voit que le piston de réaction creux 8 présente un prolongement 45 qui forme une surface annulaire d'appui 46 pour un ressort hélicoïdal de commande 47 dont la force de réaction axiale est tarée avec précision par une vis 48 vissée de façon réglable dans un alésage fileté 49 du corps 1.

Au détendeur 23 de la valve à commande électrique, est associé un bloc électromécanique de commande 50 dont le corps 51 est fixé par tout moyen, notamment par des vis non représentées, sur le corps de valve 1. Dans le corps 51, est prévu un alésage magnétique 52 ménagé dans un métal à grande perméabilité magnétique, tel que de l'acier doux, et dans lequel se déplace axialement avec un très faible entrefer 53 un noyau magnétique 54 réalisé également en un matériau à grande perméabilité magnétique, par exemple en ferrite. L'épaisseur de l'entrefer 53 qui est exceptionnellement de l'ordre de 0,2 mm a été exagérée sur la figure 1 afin de permettre de faire apparaître les lignes de forces magnétiques qui déterminent l'effort résultant axial sur le noyau 54. Le noyau magnétique 54 comporte à chacune de ses extrémités des axes de prolongements 55 et 56 bien centrés et qui traversent chacun un palier axial à roulement correspondant 57 et 58. L'axe de prolongement 55 vient faire saillie dans la chambre de mise à l'atmosphère 41 pour s'appuyer sur une portée d'appui 59 du piston de réaction 28 du détendeur 23.

L'axe de prolongement 58 se termine hors de l'alésage magnétique 52 par un plateau d'appui 60 d'un ressort hélicoïdal 61 taré avec précision par une vis de tarage 62, mobile axialement dans un alésage fileté 63 du corps 51, à l'aide d'une fente de manoeuvre 64. Afin de stabiliser l'effort de réaction taré du ressort 61, indépendamment des conditions extérieures dans lesquelles se trouve le bloc 51 (pression, température, hygrométrie, etc.), est interposé, entre la vis 62 et le ressort 61, un organe de stabilisation d'effort 65 en forme de galette annulaire. L'organe 65 est représenté ici centré sur un prolongement 66 de l'écrou de réglage 62, ce prolongement servant également à centrer le ressort hélicoïdal 61 sur l'écrou 62. L'organe de stabilisation 65 pourrait également être interposé entre le ressort 61 et le plateau d'appui 60. On doit comprendre que l'organe de stabilisation 65 a pour but essentiel de faire délivrer au détendeur 23 une pression la plus fidèle et la plus linéaire possible pour une même intensité électrique, lorsque les conditions ambiantes du détendeur 3 et du bloc électromécanique de commande 50 varient jusqu'à des conditions extrêmes. L'organe 65 doit, en conséquence, tenir compte de nombreuses variables, l'un des modes de réalisation étant constitué par une capsule anéroïde.

Le champ magnétique moteur exercé sur le noyau magnétique 54 est ici dirigé en sens opposé à l'effort de réaction du ressort taré 61 et est produit par un courant électrique continu amené à des bornes positive et négative 67 et 68 d'un bobinage d'excitation 69 apte à produire un nombre élevé d'ampères-tours d'excitation magnétique. Le bobinage 69 entoure un circuit magnétique intérieur 70 séparé en deux parties par une interruption centrale 71, de manière à obliger les lignes de force magnétiques à entrer dans le noyau magnétique 54 et à en sortir axialement pour traverser le bobinage. On rappellera ici que l'épaisseur de l'entrefer 53, exagérée sur la figure 1, est généralement près de 100 fois inférieure à la longueur de l'interruption centrale 71. Le bobinage d'excitation 69 est entouré par le circuit magnétique extérieur 72 qui referme le circuit magnétique intérieur qui est perpendiculaire au courant électrique d'excitation et qui traverse l'entrefer 53 car le corps de support 73 du palier axial 57 du côté du piston de réaction 28 est réalisé en un matériau non magnétique.

Les paliers axiaux à roulement 57 et 58 assurent une grande mobilité axiale au noyau magnétique 54 mais ils risquent de se coincer au cours du déplacement axial du noyau 54 lorsque les deux alésages à réception de ces paliers axiaux ne sont pas usinés et/ou montés parfaitement coaxiaux et parallèles. On a représenté sur la figure 2 une solution qui peut être appliquée à l'axe de prolongement 55. La bague intérieure 74 du palier axial à roulement 57 est munie d'un bourrelet 75 à section transversale arrondie au contact de la surface cylindrique extérieure de l'axe 55, tandis que la bague extérieure 76 du palier 57 est montée ajustée et maintenue axialement par des butées 77 et 78 dans l'alésage 79 de réception du palier axial et de traversée de l'axe 55. L'axe de prolongement 55 peut ainsi, en cas de léger désaxage, pivoter légèrement par rapport à l'alignement du palier axial 57.

Selon un autre mode de réalisation, représenté à la figure 3, et qui peut être appliqué à l'axe de prolongement 56, la bague extérieure 80 du palier axial 58 est munie d'un bourrelet 81 à section transversale arrondie au contact de la surface cylindrique intérieure de l'alésage 82 de réception de palier axial et de traversée de l'axe 58. La bague intérieure 83 du palier axial 58 est alors montée ajustée sur la surface cylindrique extérieure de l'axe de prolongement 56 où elle est maintenue axialement par des butées 84 et 85 constituées, par exemple, comme les butées 77, 78 par des anneaux élastiques (circlips) engagés dans des rainures annulaires. En cas de léger désaxage avec l'axe de prolongement 55, l'axe de prolongement 56 peut ainsi pivoter légèrement avec son roulement axial 58 dans l'alésage 82, sans que le noyau magnétique 54 n'entre en contact avec son alésage magnétique 52, en dépit de la très faible valeur de l'entrefer 53. On peut bien entendu utiliser chacune des solutions des figures 2 et 3 pour les deux axes de prolongement, ou bien inverser les paliers des axes de prolongement.

On va maintenant expliquer le fonctionnement de la valve à commande électrique selon l'invention, en correspondance à la figure 1 et au graphique de la figure 4.

La pression dans la conduite d'alimentation 22 du détendeur 23 de la valve à commande électrique est déterminée par le détendeur préréglé 3. Dans la position représentée sur la figure 1, un équilibre de force s'établit entre d'une part l'action de la pression délivrée à la chambre de sortie 16 sur la membrane 9 et d'autre part l'effort de réaction du ressort taré 47. L'extrémité annulaire effilée du poussoir 7 est en appui léger sur la rondelle d'étanchéité en élastomère 12 qui est, elle-même, en appui sous la seule action du ressort de rappel 5 sur la portée annulaire du siège rigide 6. Si une consommation d'air comprimé se manifeste à la conduite d'alimentation 22, la pression de la chambre de sortie 16 s'effondre et l'effort de réaction 47 repousse la rondelle d'étanchéité 12 du clapet 4 à distance du siège 6 pour ouvrir un passage annulaire qui établit alors, de façon quasi-stable, en partie grâce à l'effet d'amortissement de l'étranglement 15, une perte de charge entre la conduite d'alimentation générale 2 et la conduite d'alimentation de valve 22, telle que la pression régnant dans la conduite 22 corresponde exactement à la pression tarée Pₘₐₓ (voir la figure 4) déterminée par le tarage du ressort 47. Cette pression tarée ne diminue légèrement que les grands délits de fluide, du fait que le ressort taré 47 doit se détendre un peu pour ouvrir plus largement le passage annulaire entre le siège 6 et la rondelle d'étanchéité en élastomère 12.

Lorsqu'aucun courant électrique ne parcourt le bobinage d'excitation 69, la pression délivrée par le détendeur 23 est déterminée par l'effort d'actionnement axial du ressort taré 61 agissant sur le poussoir 27. Le ressort 61 est taré à une valeur telle que seule une pression P_{S} agissant dans la chambre de réaction 36 sur la membrane 29 est susceptible de repousser le ressort 61 vers la droite de la figure 1. Il s'ensuit que le clapet 24 est repoussé à distance du siège rigide 26 et que le détendeur 23 est complètement ouvert, la pression dans la conduite d'alimentation 42a étant alors déterminée à la valeur Pₘₐₓ par le détendeur préréglé 3.

Lorsqu'un faible courant d'excitation parcourt le bobinage 69, l'effort magnétique qui est ici dirigé en sens inverse de l'effort de réaction du ressort hélicoïdal taré 61 vient réduire l'effort axial sur le noyau magnétique 54, dirigé vers la gauche de la figure 1. Lorsque l'intensité I qui parcourt le bobinage 69 atteint la valeur Iₘ₁, l'action combinée de la réaction de la pression agissant sur la membrane 29 et de l'effort magnétique axial exercé sur le noyau 54, est suffisante pour vaincre la réaction du ressort 61 et le frottement des paliers axiaux de roulement 57 et 58 et repousser le ressort 61 vers la droite de la figure 1 jusqu'à ce que la rondelle d'étanchéité en élastomère 32 vienne en appui d'étanchéité sur le siège rigide 26, le poussoir 27 restant en contact avec la rondelle 32. Le courant d'excitation I continuant à augmenter dans le bobinage 69, le poussoir 27 se décolle de la rondelle d'étanchéité 32 et la pression de la conduite d'alimentation 42a diminue par mise à l'échappement, via le passage central 40 du poussoir 27, de la chambre d'alimentation 42.

Lorsque l'intensité I atteint la valeur Iₘₐₓ₁, le ressort 61 ne peut plus repousser le noyau 54 vers la gauche de la figure et la chambre de sortie 42 de la valve 23 est mise à l'échappement en permanence.

Lorsque l'intensité I qui parcourt le bobinage 69 diminue à nouveau, le ressort 61 ne peut repousser le noyau 54 vers la gauche de la figure que pour une valeur d'intensité Iₘₐₓ₂ inférieure à Iₘₐₓ₁, car il doit vaincre les frottements des paliers axiaux à roulement 57 et 58.

Pour des variations rapides du courant I, il risquerait de se produit des mises en vibration de l'un des éléments massifs suspendus sur un ressort: soit le clapet d'admission-échappement 24, soit le piston de réaction 28 en appui sur le noyau magnétique 54 et sur le ressort taré 61. L'amortissement de ces deux systèmes oscillants masse-ressort est ici réalisé partiellement par voie pneumatique, car en cas d'ouverture brutale du clapet 24, les pressions régnant respectivement dans la chambre de réaction 36 et dans la chambre d'équilibrage 33, ne s'égalisent qu'avec retard pour rejoindre la pression régnant dans la chambre d'alimentation 42. La variation retardée de la pression régnant dans la chambre de réaction 36 amortit le système masse-ressort du noyau 54 et du ressort 61 en combinaison avec la friction exercée sur le poussoir 27 à la traversée étanche du plateau de séparation 44. La variation très retardée de la pression régnant dans la chambre d'équilibrage 33 participe, avec les frictions dans les alésages de guidage, à l'amortissement particulièrement difficile du clapet 24.

Lorsque l'intensité qui parcourt le bobinage 69 atteint la valeur Iₘ₂, légèrement inférieure à Iₘ₁ (voir la figure 4), le ressort taré 61 ouvre en grand le clapet 24 et la pression maximale est limitée par le détendeur taré 3 qui ne présente que très peu d'hystérésis. Les hystérésis d'intensité (différence entre les intensités pour obtenir une même pression, en montée et en descente de pression) atteignent ici environ 1/20 de l'intensité maximale alors que, dans les meilleures valves à commande électrique linéaire connues, les hystérésis d'intensité atteignaient couramment 1/5 de l'intensité maximale de commande. Ces bons résultats de sensibilité de la valve selon l'invention sont obtenus sans aucune tendance à l'instabilité en variation rapide, grâce à la combinaison des paliers de roulement axiaux pivotants (rotulants) et à l'élimination des valeurs de pression limite (zone de pression P_{S}) perturbées par les frottements.

On notera que l'existence d'un courant d'excitation inférieur à la valeur Iₘ₂ dans le bobinage 69 n'exerce aucune influence sur le détendeur 23 ouvert en permanence et dont la pression de sortie est alors régulée par le détendeur 3. Le maintien d'un tel courant d'excitation minimal présente l'avantage de permettre le contrôle permanent de l'intégrité du bobinage 69 qui peut, bien entendu, être constitué de plusieurs bobinages de même sens ou de sens opposés. L'un des bobinages peut par exemple constituer un bobinage de commande de freinage, fonctionnant en position de sécurité par diminution de courant, pour obtenir des pressions de freinage croissantes, tandis qu'un autre bobinage peut représenter un couple de freinage rhéostatique ou à récupération qui provoque une diminution correspondante de la pression de freinage.

En position de service sans freinage, on applique au bobinage de commande 69 une intensité électrique supérieure au courant Iₘₐₓ₁, de manière à imposer au détendeur 23 la mise à l'échappement de façon sûre.

La valve à commande électrique selon l'invention peut être utilisée en valve à action directe, en supprimant le ressort taré 61 et en faisant agir l'effort électromagnétique exercé sur le noyau 54 dans la direction où il applique le poussoir 27 sur le clapet 24. Bien entendu, le détendeur de sécurité 3 peut être supprimé pour ne retenir que la commande directe du détendeur 23 alimenté par une source de fluide sous pression qui pourrait être hydraulique et non plus pneumatique.

## Revendications

1. Valve à commande électrique susceptible de délivrer une pression de fluide variant de façon sensiblement linéaire avec l'intensité du courant électrique continu qui parcourt au moins un bobinage d'excitation (69), et comprenant un noyau magnétique (54) mobile axialement dans un alésage magnétique (52) et agissant sur le poussoir (27) d'un détendeur de pression (23) à clapet (24) d'admission-échappement le noyau magnétique (54) étant monté dans son alésage magnétique (52) avec un très faible jeu d'entrefer (53) et étant guidé axialement à chacune de ses extrémités par un axe de prolongement (55, 56) qui traverse un palier axial à roulement (57, 58), caractérisée en ce que le détendeur de pression comprend un piston de réaction (28) soumis à la pression de fluide délivrée par la valve et agissant à l'encontre d'un effort d'actionnement dont la valeur est déterminée par l'action du bobinage d'excitation (69) sur le noyau magnétique (54) et en ce que le palier axial à roulement comporte une partie (75, 81) susceptible d'osciller par rapport à sa surface cylindrique de guidage, de manière à autoriser un léger désaxage entre les deux paliers à roulement tout en fixant l'axe de déplacement axial du noyau (54) avec une précision interdisant tout contact entre ledit noyau magnétique et son alésage magnétique (52), malgré le très faible jeu d'entrefer (53) existant.

2. Valve selon la revendication 1, caractérisée en ce que la partie d'un palier axial à roulement qui est susceptible d'osciller est constituée par la bague intérieure (74) dudit palier axial (57), sur laquelle est ménagé un bourrelet (75) à section transversale arrondie au contact avec la surface cylindrique extérieure de l'axe de prolongement correspondant (55).

3. Valve selon la revendication 1 ou 2, caractérisée en ce que la partie d'un palier axial à roulement qui est susceptible d'osciller est constituée par la bague extérieure (80) dudit palier axial (58), sur laquelle est ménagé un bourrelet (81) à section transversale arrondie au contact avec la surface cylindrique intérieure de l'alésage (82) de réception dudit palier axial (58) dans le corps de valve.

4. Valve selon les revendications 1 à 3, caractérisée en ce que le clapet d'admission-échappement (24) du fluide sous pression est mobile dans deux alésages de guidage (31, 38) qui délimitent entre eux et respectivement avec la section transversale dudit clapet et une paroi transversale du corps de valve, une chambre d'équilibrage (33), sensiblement de même section que la section du clapet soumise à la pression délivrée par la valve en ce que ladite chambre d'équilibrage est reliée à une chambre de réaction (36) délimitée par le piston de réaction (28, 29) et elle-même reliée par un étranglement (43) à la sortie de pression (42) de ladite valve pour que la pression délivrée par la valve agisse dans la chambre d'équilibrage (33) afin de repousser ledit clapet (24) sur son siège d'obturation (26), et en ce que la chambre d'équilibrage (33) est reliée à la chambre de réaction (36) par un étranglement ou un organe de perte de charge (35), de manière à amortir les oscillations éventuelles du noyau magnétique (54) par le retard de la transmission de pression entre la chambre d'équilibrage (33) et la chambre de réaction (36), tout en permettant l'équilibrage parfait après stabilisation, de l'action sur le clapet d'admission-échappement (24), de la pression délivrée par la valve.

5. Valve selon les revendications 1 à 4 et destinée à délivrer une pression de fluide décroissante lorsque l'intensité du courant électrique continu du bobinage d'excitation (69) croît, caractérisée en ce que le noyau magnétique (54) est en appui axial par un premier (55) de ses prolongements sur le poussoir (27) du détendeur de pression (23) tandis que le second prolongement (56) est en appui sur un ressort taré (61) qui repousse ledit premier prolongement (55) sur le poussoir (27) du détendeur (23) dans la direction d'ouverture à l'admission du clapet d'admission-échappement (24).

6. Valve selon la revendication 5, caractérisée en ce que l'alimentation en fluide sous pression du détendeur de pression (23) est contrôlée par un détendeur de sécurité (3) dont la pression maximale d'alimentation est déterminée avec précision par un ressort taré de sécurité (47) agissant sur un poussoir (7) d'un clapet d'admission-échappement (4) solidaire d'un piston (8) de réaction à la pression délivrée par le détendeur de sécurité (3).

7. Valve selon la revendication 6, caractérisée en ce que le ressort taré (61) agissant sur le noyau magnétique (54) est taré pour qu'en l'absence de courant dans le bobinage d'excitation (69) du noyau magnétique (54) et dans le cas où la pression d'alimentation de la valve est suffisante, le détendeur (23) de la valve délivre une pression de fluide supérieure à celle délivrée par le détendeur de sécurité (3), de manière que ledit détendeur de sécurité réalise l'écrêtement de la pression maximale délivrée par la valve.

8. Valve selon les revendications 5 à 7, caractérisée en ce que le ressort taré (61) coopère, à une extrémité, avec un organe de stabilisation (65) de l'effort de tarage du ressort et de l'action de la valve, indépendamment des conditions extérieures (pression, température, hygrométrie, etc.).

9. Valve selon la revendication 8, caractérisée en ce que l'organe de stabilisation (65) est interposé entre le corps d'une vis de tarage (62) du ressort taré et une extrémité du ressort taré (61).

10. Valve selon la revendication 8, caractérisée en ce que l'organe de stabilisation (65) présente une forme de galette annulaire traversée par un téton central (66) de la vis de tarage (62), qui se prolonge extérieurement à ladite galette pour servir de guide central au ressort taré hélicoïdal (61).

## Claims

1. Electrically-controlled valve able to supply a fluid pressure that varies substantially linearly with the intensity of a DC electric current passing through at least one control winding (69) and comprising a magnetic plunger (54) able to move axially inside a magnetic field bore (52) and acting on the pushrod (27) of a self-lapping valve (23) having an inlet-outlet valve plate (24) said magnetic plunger (54) being mounted in said magnetic field bore (52) with a very small air gap (53) and being axially guided at each one of its ends by an extension shaft (55, 56) passing through an axial rolling bearing (57, 58), characterized in that said self-lapping valve comprises a reaction piston (28) subjected to the fluid pressure supplied by the valve and acting against an actuation force the value of which is determined by the action of the control winding (69) on said magnetic plunger (54) and in that said axial rolling bearing comprises a portion (75, 81) designed to oscillate with respect to its cylindrical guide surface, so as to allow said rolling bearings to be slightly off-axis while at the same time fixing the axial axis of displacement of said plunger (54) with a degree of accuracy preventing all contact between said magnetic plunger and its magnetic field bore (52), despite the existence of a very small airgap (53).

2. Valve according to claim 1, characterized in that said axial rolling bearing portion that is designed to oscillate is constituted by the inner ring (74) of said axial bearing (57) on which a shoulder (75) with a rounded cross-section is mounted in contact with the outer cylindrical surface of the corresponding extension shaft (55).

3. Valve according to claim 1 or 2, characterized in that said axial rolling bearing portion that is designed to oscillate is constituted by the outer ring (80) of said axial bearing (58), on which a shoulder (81) having a rounded cross-section is formed in contact with the inner cylindrical surface of the passage (82) designed to receive said axial bearing (58) within said valve body.

4. Valve according to claims 1 to 3, characterized in that said inlet-outlet valve plate (24) for fluid under pressure is movable in two guide passages (31, 38) defining therebetween and, respectively, with the cross-section of said valve plate and a transverse wall of said valve body, a balancing chamber (33) having substantially the same cross-section as the cross-section of said valve plate subject to the pressure supplied by said valve, and in that said balancing chamber is connected to a reaction chamber (36) delimited by said reaction piston (28, 29) and itself linked by a flow restriction (43) to the pressure outlet (42) of said valve whereby the pressure supplied by said valve acts inside said balancing chamber (33) to force said plate valve (24) back against its closing seat (26), and in that said balancing chamber (33) is linked to said reaction chamber (36) by a flow restriction or a loss of pressure member (35), in order to damp possible oscillations of said magnetic plunger (54) through the delay in transmitting pressure between said balancing chamber (33) and said reaction chamber (36) while at the same time ensuring that the action on the inlet-outlet valve plate (24) of the pressure supplied by the valve is, after stabilization, perfectly balanced.

5. Valve according to claims 1 to 4, and designed to supply a decreasing fluid pressure when the DC current strength in said control winding (69) increases, characterized in that said magnetic plunger (54) bears in the axial sense, at a first one (55) of its axial extensions against the pushrod (27) of said self-lapping valve (23) whereas the second said extension (56) bears against a rated spring (61) urging said first extension (55) against said pushrod (27) of said self-lapping valve in the inlet opening direction of said inlet-outlet valve plate (24).

6. Valve according to claim 5, characterized in that the pressurized fluid feed to said self-lapping valve (23) is controlled by a safety pressure control valve (3) the maximum feed pressure of which is determined accurately by a rated safety spring (47) acting on a pushrod (7) of an inlet-outlet valve plate (4) integral with a reaction piston (8) reacting to the pressure supplied by said safety control valve (3).

7. Valve according to claim 6, characterized in that said rated spring (61) acting on said magnetic plunger (54) is rated whereby in case of absence of current in the control winding (69) of said magnetic plunger (54) and provided the valve feed pressure is sufficient, the self-lapping valve (23) of said valve supplies a fluid pressure greater than that supplied by said safety control valve (3), whereby said safety control valve performs peak value limiting of the maximum pressure supplied by the valve.

8. Valve according to claims 5 to 7, characterized in that said rated spring (61) cooperates, at one end thereof, with means for stabilizing (65) the force due to the spring's rating and the action of the valve, independently of external conditions (pressure, temperature, relative humidity, etc.).

9. Valve according to claim 8, wherein said stabilizing means (65) is inserted between the body of a screw (62) for varying the rating of said rated spring, and one end of said rated spring (61).

10. Valve according to claim 8, characterized in that said stabilizing means (65) has the form of an annular cushion member through which a central shaft (66) of said rating-adjusting screw (62) passes and extending externally thereof to act as a central guide for the rated helical spring (61).

## Patentansprüche

1. Elektrisch gesteuertes Ventil, das einen Fluiddruck liefern kann, der sich im wesentlichen linear mit der Stromstärke des mindestens eine Erregungswicklung (69) durchfließenden Gleichstroms ändert, und das einen Magnetkern (54) aufweist, der in einer Magnetbohrung (52) axial beweglich ist und auf den Drücker (27) eines Druckminderventils (23) mit Einlaß-Auslaß-Absperrkörper (24) einwirkt, wobei der Magnetkern (54) in seiner Magnetbohrung (52) mit einem sehr geringen Luftspaltspiel (53) montiert ist und an jedem seiner Enden durch eine Verlängerungsachse (55, 56) axial geführt ist, die ein axiales Wälzlager (57, 58) durchquert, dadurch gekennzeichnet, daß das Druckminderventil einen Reaktionskolben (28) aufweist, der dem vom Ventil gelieferten Fluiddruck ausgesetzt ist und entgegen einer Betätigungskraft wirkt, deren Wert durch die Wirkung der Erregungswicklung (69) auf den Magnetkern (54) bestimmt ist, und daß das axiale Wälzlager einen Teil (75, 81) besitzt, der bezüglich seiner zylindrischen Führungsfläche schwingen kann, so daß eine leichte Achsenversetzung zwischen den beiden Wälzlagern zugelassen wird, wobei gleichzeitig die Axialbewegungsachse des Kerns (54) mit einer Genauigkeit festgelegt wird, die jeden Kontakt zwischen diesem Magnetkern und seiner Magnetbohrung (52) trotz des bestehenden sehr geringen Luftspaltspiels (53) verhindert.

2. Ventil nach Anspruch 1, dadurch gekennzeichnet, daß der Teil eines axialen Wälzlagers, der schwingen kann, aus dem Innenring (74) dieses axialen Lagers (57) besteht, auf dem ein Wulst (75) mit einem abgerundeten Querschnitt vorgesehen ist, der mit der zylindrischen Außenfläche der entsprechenden Verlängerungsachse (55) in Kontakt ist.

3. Ventil nach Anspruch 1 oder 2, dadurch gekennzeichnet, daß der Teil eines axialen Wälzlagers, der schwingen kann, aus dem Außenring (80) dieses axialen Lagers (58) besteht, auf dem ein Wulst (81) mit abgerundetem Querschnitt vorgesehen ist, der mit der zylindrischen Innenfläche der Bohrung (82) zur Aufnahme dieses axialen Lagers (58) in dem Ventilgehäuse in Kontakt ist.

4. Ventil nach den Ansprüche 1 bis 3, dadurch gekennzeichnet, daß der Einlaß-Auslaß-Absperrkörper (24) des Druckfluids in zwei Führungsbohrungen (31, 38) beweglich ist, die miteinander bzw.mit dem Querschnitt dieses Absperrkörpers und einer Querwand des Ventilgehäuses eine Ausgleichskammer (33) abgrenzen, die im wesentlichen denselben Querschnitt wie der Absperrkörper hat und dem vom Ventil gelieferten Druck ausgesetzt ist, daß diese Ausgleichskammer mit einer Reaktionskammer (36) verbunden ist, die durch den Reaktionskolben (28, 29) abgegrenzt ist und ihrerseits durch eine Drosselung (43) mit dem Druckausgang (42) dieses Ventils verbunden ist, so daß der von dem Ventil gelieferte Druck in der Ausgleichskammer (33) wirkt, um diesen Absperrkörper (24) auf seinen Absperrsitz (26) zu drücken, und daß die Ausgleichskammer (33) mit der Reaktionskammer (36) durch eine Drosselung oder ein Druckabfallorgan (35) verbunden ist, so daß die eventuellen Schwingungen des Magnetkerns (54) durch die Verzögerung der Druckübertragung zwischen der Ausgleichskammer (33) und der Reaktionskammer (36) gedämpft werden, wobei gleichzeitig nach Stabilisierung der vollständige Ausgleich der Wirkung des vom Ventil gelieferten Drucks auf den Einlaß-Auslaß-Absperrkörper (24) gestattet wird.

5. Ventil nach den Ansprüchen 1 bis 4, das dazu bestimmt ist, einen Fluiddruck zu liefern, der abnimmt, wenn die Stromstärke des Gleichstroms der Erregungswicklung (69) zunimmt, dadurch gekennzeichnet, daß der Magnetkern (54) über eine erste (55) seiner Verlängerungen (55) an dem Drücker (27) des Druckminderventils (23) in axialer Anlage ist, während die zweite Verlängerung (56) an einer tarierten Feder (61) in Anlage ist, die diese erste Verlängerung an den Drücker (27) des Druckminderventils (23) in der Richtung der Öffnung des Einlasses des Einlaß-Auslaß-Absperrkörpers (24) zurückdrückt.

6. Ventil nach Anspruch 5, dadurch gekennzeichnet, daß die Druckfluidversorgung des Druckminderventils (23) durch ein Sicherheitsdruckminderventil (3) gesteuert ist, dessen maximaler Versorgungsdruck mit Genauigkeit durch eine tarierte Sicherheitsfeder (47) bestimmt ist, die auf einen Drücker (7) eines Einlaß-Auslaß-Absperrkörpers (4) einwirkt, der mit einem Kolben (8) zur Reaktion auf den von dem Sicherheitsdruckminderventil (3) gelieferten Druck fest verbunden ist.

7. Ventil nach Anspruch 6, dadurch gekennzeichnet, daß die auf den Magnetkern (54) einwirkende tarierte Feder (61) so tariert ist, daß das Druckminderventil (23) des Ventils bei Fehlen von Strom in der Erregungswicklung (69) des Magnetkerns (54) und in dem Fall, in dem der Versorgungsdruck des Ventils ausreichend ist, einen Fluiddruck liefert, der höher als der von dem Sicherheitsdruckminderventil (3) gelieferte Fluiddruck ist, so daß dieses Sicherheitsdruckminderventil die Spitzenbegrenzung des vom Ventil gelieferten Höchstdrucks vornimmt.

8. Ventil nach den Ansprüche 5 bis 7, dadurch gekennzeichnet, daß die tarierte Feder (61) an einem Ende mit einem Organ (65) zur Stabilisierung der Tarierkraft der Feder und der Wirkung des Ventils unabhängig von den äußeren Bedingungen (Druck, Temperatur, Luftfeuchtigkeit usw.) zusammenwirkt.

9. Ventil nach Anspruch 8, dadurch gekennzeichnet, daß das Stabilisierungsorgan (65) zwischen den Körper einer Schraube (62) zur Tarierung der tarierten Feder und einem Ende der tarierten Feder (61) eingesetzt ist.

10. Ventil nach Anspruch 8, dadurch gekennzeichnet, daß das Stabilisierungsorgan (65) die Form einer ringförmigen Scheibe hat, die von einem zentralen Bolzen (66) der Tarierschraube (62) durchsetzt ist, der außerhalb dieser Scheibe verlängert ist, um als zentrale Führung der schraubenförmigen Tarierfeder (61) zu dienen.
